(19) Europäisches Patentamt
European Patent Office
Office européen des brevets

(11) **EP 4 628 935 A1**

(12) **EUROPEAN PATENT APPLICATION**

(43) Date of publication:
**08.10.2025 Bulletin 2025/41**

(21) Application number: **24193036.1**

(22) Date of filing: **06.08.2024**

(51) International Patent Classification (IPC):
**G01S 13/931** (2020.01)     **G01S 7/41** (2006.01)
**E05F 15/73** (2015.01)

(52) Cooperative Patent Classification (CPC):
**G01S 13/931; E05F 15/73; G01S 7/415;**
E05Y 2400/852; E05Y 2400/858; E05Y 2900/546;
E05Y 2900/548; G01S 2013/93272

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.04.2024 KR 20240045156**

(71) Applicant: **Bitsensing Inc.**
**Seongnam-si, Gyeonggi-do 13105 (KR)**

(72) Inventor: **BAEK, Hyo In**
**13569 Seongnam-si, Gyeonggi-do (KR)**

(74) Representative: **BCKIP Part mbB**
**MK1**
**Landsbergerstraße 98, 3.Stock**
**80339 München (DE)**

(54) **METHOD AND DEVICE FOR DETECTING KICK MOTION**

(57)     A device of detecting a kick using a radar signal according to an embodiment of the present disclosure includes: a transceiver configured to transmit a radar signal toward a subject and receive a radar signal reflected from the subject; a feature derivation unit configured to derive feature information of the subject based on the radar signal; a movement collection unit configured to determine whether or not to enter a kick determination state based on the feature information; and a kick determination unit configured to determine whether a movement of the subject is a valid kick based on the collected feature information in the kick determination state.

## FIG. 1

EP 4 628 935 A1

## Description

### TECHNICAL FIELD

The present disclosure relates to a device and method of detecting a kick of a subject using a radar signal.

### BACKGROUND

A technology for opening and closing a door at the back of a car (so-called "tailgate") provides important convenience in daily life. Particularly, in situations where a user is carrying luggage or unable to use both hands, automatically opening and closing the tailgate of a car can be very helpful to the user. In response to this need, various sensor-based automatic opening/closing systems have been developed. Currently, one of the widely used technologies is a system utilizing ultrasonic sensors.

A system based on ultrasonic sensors allows the tailgate of a car to open and close without contact by detecting specific movements of the user. This system provides great convenience when the user is unable to freely use both hands, but has some limitations and issues.

The main drawback of the ultrasonic sensors is their limited detection range. Since the detection range of the ultrasonic sensors is relatively short, the ultrasonic sensors can detect movements only when the user is sufficiently close to the ultrasonic sensors. This requires the user to make a deliberately big or precise gesture, which causes the user to have more difficulties when the user is carrying luggage or in uncomfortable situations.

Also, the ultrasonic sensors are highly influenced by the surrounding environment. Environmental factors, such as animal movements or heavy rain can lead to false detection, which degrades the reliability of the system. The false detection can confuse the user or result in unexpected opening or closing of the tailgate, potentially leading to safety issues.

To overcome these problems of conventional technologies, there have been proposed kick detection devices using a radar which has a wider detection range and is highly resistant to environmental influences. However, radar-based kick sensors require advanced algorithms and signal processing techniques to handle erroneous signals caused by environmental interference.

### SUMMARY

In view of the foregoing, the present disclosure is conceived to provide a kick detection device which has a wide detection range and is highly resistant to environmental influences by detecting a kick of a user based on a radar signal.

The present disclosure is conceived to provide a kick detection device which can improve the accuracy in detecting a kick by removing unwanted noise while detecting a kick based on a radar signal.

The present disclosure is conceived to provide a kick detection device which can suppress opening or closing of a tailgate caused by a malfunction by differentiating movements of a user based on various kinds of information and recognizing a kick within a valid range.

The problems to be solved by the present disclosure are not limited to the above-described problems. There may be other problems to be solved by the present disclosure.

An aspect of the present disclosure provides a device of detecting a kick using a radar signal, including: a transceiver configured to transmit a radar signal toward a subject and receive a radar signal reflected from the subject; a feature derivation unit configured to derive feature information of the subject based on the radar signal; a movement collection unit configured to determine whether or not to enter a kick determination state based on the feature information; and a kick determination unit configured to determine whether a movement of the subject is a valid kick based on the feature information in the kick determination state.

This summary is provided by way of illustration only and should not be construed as limiting in any manner. Besides the above-described exemplary embodiments, there may be additional exemplary embodiments that become apparent by reference to the drawings and the detailed description that follows.

According to an embodiment of the present disclosure, it is possible to provide a kick detection device which has a wide detection range and is highly resistant to environmental influences by detecting a kick of a user based on a radar signal.

According to an embodiment of the present disclosure, it is possible to improve the accuracy in detecting a kick by removing unwanted noise while detecting a kick based on a radar signal.

According to an embodiment of the present disclosure, it is possible to suppress opening or closing of a tailgate caused by a malfunction by differentiating movements of a user based on various kinds of information and recognizing a kick within a valid range.

## BRIEF DESCRIPTION OF THE DRAWINGS

In the detailed description that follows, embodiments are described as illustrations only since various changes and modifications will become apparent to a person with ordinary skill in the art from the following detailed description. The use of the same reference numbers in different figures indicates similar or identical items.

FIG. 1 is a configuration diagram of a kick detection system according to an embodiment of the present disclosure.

FIG. 2 is a configuration diagram of a kick detection device according to an embodiment of the present.

FIG. 3 is a diagram explaining a procedure of generating range-Doppler map information according to an embodiment of the present disclosure.

FIG. 4 is a diagram explaining a procedure of deriving feature information from the range-Doppler map information according to an embodiment of the present disclosure.

FIG. 5 is a diagram explaining a procedure of storing the feature information in a buffer according to an embodiment of the present disclosure.

FIG. 6 is a diagram explaining a procedure of deriving azimuth angle information according to an embodiment of the present disclosure.

FIG. 7 is a flowchart explaining the procedure of storing the feature information in the buffer according to an embodiment of the present disclosure.

FIG. 8 is a diagram explaining a variance in range information per frame according to an embodiment of the present disclosure.

FIG. 9 shows an example of a pseudo code explaining a procedure of differentiating movements based on the variance in range information according to an embodiment of the present disclosure.

FIG. 10 is a diagram explaining a variance in velocity information per frame according to an embodiment of the present disclosure.

FIG. 11 is a diagram explaining a valid range of kick detection according to an embodiment of the present disclosure.

FIG. 12 is a diagram explaining a procedure of identifying information of the buffer according to an embodiment of the present disclosure.

FIG. 13 shows an example of a pseudo code explaining a procedure of determining a valid kick according to an embodiment of the present disclosure.

FIG. 14 is a diagram explaining a threshold point of a valid range according to an embodiment of the present disclosure.

FIG. 15 is a flowchart showing a kick detection method according to an embodiment of the present disclosure.

## DETAILED DESCRIPTION

Hereafter, example embodiments will be described in detail with reference to the accompanying drawings so that the present disclosure may be readily implemented by those skilled in the art. However, it is to be noted that the present disclosure is not limited to the example embodiments but can be embodied in various other ways. In the drawings, parts irrelevant to the description are omitted for the simplicity of explanation, and like reference numerals denote like parts through the whole document.

Throughout this document, the term "connected to" may be used to designate a connection or coupling of one element to another element and includes both an element being "directly connected" another element and an element being "electronically connected" to another element via another element. Further, it is to be understood that the terms "comprises," "includes," "comprising," and/or "including" means that one or more other components, steps, operations, and/or elements are not excluded from the described and recited systems, devices, apparatuses, and methods unless context dictates otherwise; and is not intended to preclude the possibility that one or more other components, steps, operations, parts, or combinations thereof may exist or may be added.

Throughout this document, the term "unit" may refer to a unit implemented by hardware, software, and/or a combination thereof. As examples only, one unit may be implemented by two or more pieces of hardware or two or more units may be implemented by one piece of hardware.

Throughout this document, a part of an operation or function described as being carried out by a terminal or device may be implemented or executed by a device connected to the terminal or device. Likewise, a part of an operation or function described as being implemented or executed by a device may be so implemented or executed by a terminal or device connected to the device.

The functionality of the elements disclosed herein may be implemented using circuitry or processing circuitry which includes general purpose processors, special purpose processors, integrated circuits, ASICs ("Application Specific Integrated Circuits"), conventional circuitry and/or combinations thereof which are configured or programmed to perform the disclosed functionality.

Processors are considered processing circuitry or circuitry as they include transistors and other circuitry therein. In the disclosure, the circuitry, units, or means are hardware that carry out or are programmed to perform the recited functionality.

The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

Hereinafter, an embodiment of the present disclosure will be described in detail with reference to the accompanying drawings.

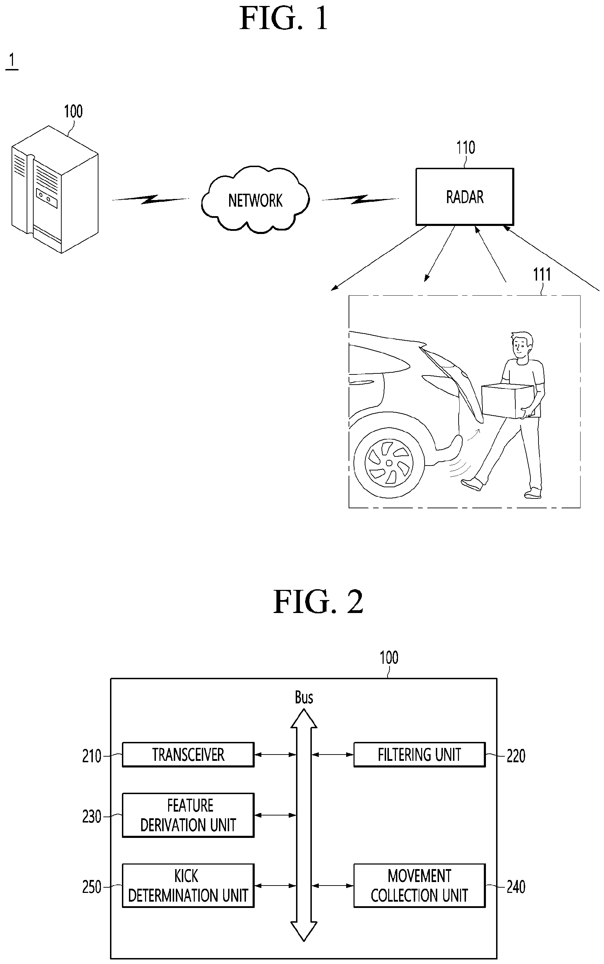

**FIG. 1** is a configuration diagram of a kick detection system according to an embodiment of the present disclosure.

Referring to **FIG. 1,** a kick detection system 1 may include a kick detection device 100 and a radar 110.

The components of the kick detection system 1 illustrated in **FIG. 1** are typically connected to each other via a network. For example, as illustrated in **FIG. 1,** the kick detection device 100 and the radar 110 may be connected simultaneously or sequentially.

The network refers to a connection structure that enables information exchange between nodes such as devices, devices, etc. and includes LAN (Local Area Network), WAN (Wide Area Network), Internet (WWW: World Wide Web), a wired or wireless data communication network, a telecommunication network, a wired or wireless television network, and the like. Examples of the wireless data communication network may include 3G, 4G, 5G, 3GPP (3rd Generation Partnership Project), LTE (Long Term Evolution), WIMAX (World Interoperability for Microwave Access), Wi-Fi, Bluetooth communication, infrared communication, ultrasonic communication, VLC (Visible Light Communication), LiFi, and the like, but may not be limited thereto.

The kick detection device 100 may analyze a radar signal reflected from a subject 111 by using the radar 110. The kick detection device 100 may detect the presence or absence of a kick of the subject 111 based on a radar signal which changes when the subject 111 behind a vehicle (*e.g.*, a car) kicks under a tailgate. For example, the kick detection device 100 may be located beneath the rear bumper of the car and thus may transmit a radar signal toward the subject 111 and receive a radar signal reflected from the subject 111 through the radar 110.

The kick detection device 100 may determine the presence or absence of a kick of the subject 111 by using the radar 110.

Therefore, the kick detection device 100 enables a precise determination on the presence or absence of a kick even when the subject 111 does not hold or wear a separate device for detecting a kick.

The radar 110 may be attached to or mounted on the kick detection device 100 to detect a kick of the subject 111. Also, at least some components of the kick detection device 100 may be located in a space separate from the radar 110, and may communicate by wire or wirelessly with the radar 110 through the network to detect a kick of the subject 111. In the following description, a transceiver of the kick detection device 100 may be described as a component corresponding to the radar 110 of **FIG. 1.**

Hereinafter, each component of the kick detection device 100 will be described.

**FIG. 2** is a configuration diagram of a kick detection device 100 according to an embodiment of the present disclosure.

Referring to **FIG. 2,** the kick detection device 100 may include a transceiver 210, a filtering unit 220, a feature derivation unit 230, a movement collection unit 240, and a kick determination unit 250. However, these components 210 to 250 are just examples of components that can be controlled by the kick detection device 100.

The transceiver 210 may transmit a radar signal toward a subject and receive a radar signal reflected from the subject.

The filtering unit 220 may generate a peak signal by filtering the radar signal.

The feature derivation unit 230 may derive feature information of the subject based on the radar signal.

The movement collection unit 240 may determine whether or not to enter a kick determination state based on the feature information.

The kick determination unit 250 may determine whether a movement of the subject is a valid kick based on the feature information in the kick determination state.

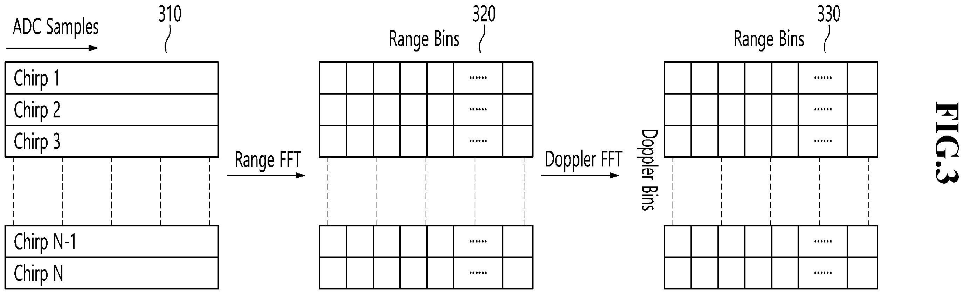

**FIG. 3** is a diagram explaining a procedure of generating range-Doppler map information according to an embodiment of the present disclosure.

The filtering unit 220 may generate range-Doppler map information based on the radar signal and derive a peak signal by filtering the range-Doppler map information.

Also, the filtering unit 220 may remove noise from the range-Doppler map information and derive a signal with a power equal to or higher than a predetermined threshold value as the peak signal.

**FIG. 3** shows the procedure of generating the range-Doppler map information from the radar signal by the filtering unit 220 to derive a peak signal based on the radar signal. The filtering unit 220 may generate the range-Doppler map information through a pre-processing process of processing the radar signal as raw data obtained from the radar.

The filtering unit 220 may receive the radar signal reflected from the subject and sample each chirp of the received radar signal by an analog-to-digital converter (ADC) to generate a digital signal 310. In this process, the sampled data for each chirp form the structure of a raw radar signal.

Then, the filtering unit 220 may apply a two-dimensional Fast Fourier Transform (2D-FFT) to the digital signal. Through the 2D-FFT, the digital signal may be transformed from a time domain to a range-Doppler domain. A first Fourier transform may be performed to extract range information of each subject by transforming a time domain signal to a range domain signal 320, and a second Fourier transform may be performed to obtain velocity information 330 of the subject by analyzing a change in Doppler frequency for each range.

In the range-Doppler map, the intensity of a signal depending on the range may be plotted on the horizontal axis, and the Doppler frequency may be plotted on the vertical axis.

The transformed range-Doppler map information shows range and velocity information of the subject from which the radar signal is reflected as two-dimensional data, and it can provide important information for detecting a specific event, such as a kick. Further, the range-Doppler map information is analyzed by a kick detection algorithm and used to determine whether a kick has been detected.

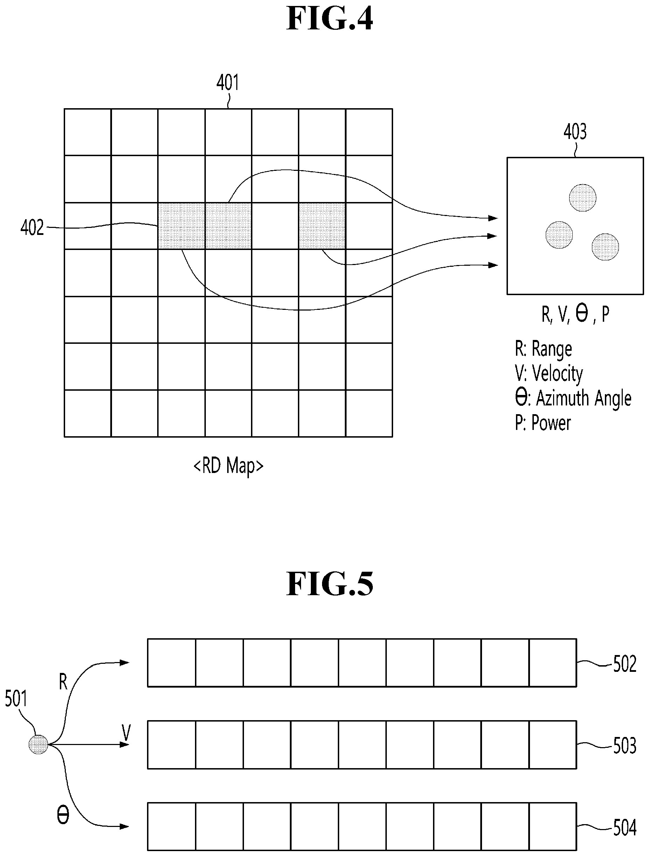

**FIG. 4** is a diagram explaining a procedure of deriving feature information from the range-Doppler map information according to an embodiment of the present disclosure.

**FIG. 4** shows the procedure of deriving a peak signal 402, which is a radar signal filtered from a two-dimensional range-Doppler map 401 by the filtering unit 220. The filtering unit 220 may filter some data from the range-Doppler map 401. More specifically, the filtering unit 220 may derive the peak signal 402 from the range-Doppler map 401 by applying a constant false alarm rate (CFAR) detection algorithm. The filtering unit 220 may select an ambient region instead of the subject and compute an average signal power of the selected regio. Then, the filtering unit 220 may dynamically determine a threshold value for differentiating a signal of the subject from noise based on the computed average noise level. Herein, the threshold value is adjusted in proportion to the level of ambient background noise, and, thus, signal detection performance can be uniformly maintained in various environments.

Meanwhile, in another embodiment of the present disclosure, the filtering unit 220 may also apply a threshold value using histogram in addition to the CFAR detection algorithm to derive a peak signal in the range-Doppler map 401.

The filtering unit 220 may scan the entire range-Doppler map 401 and regard a signal, which exceeds a predetermined threshold value, as the filtered radar signal, i.e., the peak signal 402.

The feature derivation unit 230 may derive feature information 403 from the peak signal 402. The feature information 403 derived from the peak signal 402 may include at least one of azimuth angle information about an azimuth angle at which the subject 111 is located with reference to the kick detection device 100, range information about a range between the kick detection device 100 and the subject 111, velocity information about a c 111, and power information about a power of the movement of the subject 111.

**FIG. 5** is a diagram explaining a procedure of storing the feature information in a buffer according to an embodiment of the present disclosure.

The feature derivation unit 230 may derive, from a peak signal 501, at least one of range information R about a range between the kick detection device 100 and the subject and velocity information V about a velocity of a movement of the subject. Further, the feature derivation unit 230 may derive azimuth angle information $\theta$ about an azimuth angle at which the subject is located with reference to the kick detection device 100 based on a phase difference between radar signals. These kinds of feature information may be generated corresponding to a peak signal generated for each frame.

That is, the kick detection device 100 may divide the received radar signal into frame units and filter the divided frame-unit radar signals to generate peak signals in frame units. Also, the kick detection device 100 may derive feature information from each of the peak signals generated in frame units.

The feature information generated in frame units may be classified into the range information R, the velocity information V, and the azimuth angle information $\theta$, and each feature information may be stored in a corresponding buffer. The range information R may be stored in a range buffer 502, the velocity information V may be stored in a velocity buffer 503, and the azimuth angle information $\theta$ may be stored in an azimuth angle buffer 504. Herein, each storage area dividing a buffer may store therein feature information corresponding to one frame unit.

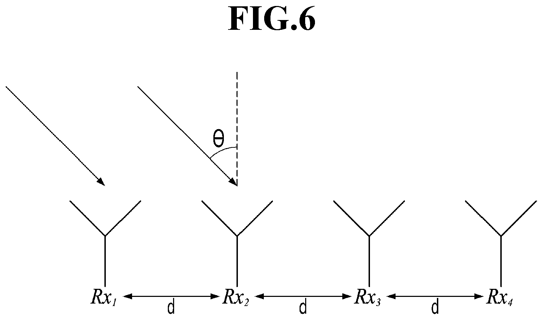

**FIG. 6** is a diagram explaining a procedure of deriving azimuth angle information according to an embodiment of the present disclosure.

The feature derivation unit 230 may derive the azimuth angle information $\theta$ about an azimuth angle at which the subject is located with reference to the kick detection device 100 based on a phase difference between radar signals.

**FIG. 6** shows an example where the transceiver 210 of the kick detection device 100 has a 1Tx-4Rx array. That is, the transceiver 210 may include one transmitter (not shown) and four receivers $Rx_1$ to $Rx_4$. Also, an internal distance between the receivers $Rx_1$ to $Rx_4$ may be defined as d. However, it is only exemplary, and the transceiver 210 may include different numbers of transmitters or receivers and a range between the receivers may vary depending on the use environment or the design method of the kick detection device 100.

In an example shown in **FIG. 6,** received radar signals have a phase difference depending on an incident angle of the radar signals incident to the receivers $Rx_1$ to $Rx_4$. Therefore, the feature derivation unit 230 may derive azimuth angle information of the subject 111 depending on a difference in directional of arrival between the receivers $Rx_1$ to $Rx_4$. To this end, the Bartlett or multiple signal classification (MUSIC) algorithm may be used.

<Equation 1>

$$\begin{bmatrix} e^{-j2\pi\frac{d_{11}}{\lambda}\sin\theta_1} & e^{-j2\pi\frac{d_{12}}{\lambda}\sin\theta_1} & e^{-j2\pi\frac{d_{13}}{\lambda}\sin\theta_1} & e^{-j2\pi\frac{d_{14}}{\lambda}\sin\theta_1} \\ \vdots & \vdots & \vdots & \vdots \\ e^{-j2\pi\frac{d_{11}}{\lambda}\sin\theta_M} & e^{-j2\pi\frac{d_{12}}{\lambda}\sin\theta_M} & e^{-j2\pi\frac{d_{13}}{\lambda}\sin\theta_M} & e^{-j2\pi\frac{d_{14}}{\lambda}\sin\theta_M} \end{bmatrix} \begin{bmatrix} Y_{Tx1-Rx1} \\ Y_{Tx1-Rx2} \\ Y_{Tx1-Rx3} \\ Y_{Tx1-Rx4} \end{bmatrix}$$

Herein, $d_{ij}\sin\theta$ denotes a phase difference depending on an antenna distance between an ith receiver Rx and a jth receiver Rx, d denotes an internal distance between receivers Rx, $\theta_M$ denotes an Mth detection angle, $\lambda$ denotes a wavelength of a radar signal, and Y denotes a fast Fourier transfer (FFT) signal of each channel.

The feature derivation unit 230 may perform a matrix multiplication between a complex conjugate of a steering vector and an FFT signal Y of each channel according to Equation 1.

Herein, the steering vector may refer to a phase difference between radar signals depending on an angle of a radar signal arriving at each receiver Rx. Further, Y denotes FFT data between a transmitter and a receiver Tx-Rx of each channel for the same peak signal in a range-Doppler map.

The feature derivation unit 230 may derive an angular power spectrum by obtaining a power spectrum of an incident angle of each radar signal as a result of matrix multiplication. Further, the feature derivation unit 230 may derive an angle at a point with the greatest power on each power spectrum as the azimuth angle information.

Meanwhile, the feature derivation unit 230 may derive range information and velocity information from the peak signal derived from the range-Doppler map.

<Equation 2>

$$Range_{Target} = R_i \cdot \Delta R$$
$$Velocity_{Target} = D_i \cdot \Delta V$$

In Equation 2, $Range_{Target}$ denotes a distance between the kick detection device 100 and the subject 111 and $R_i$ denotes a range index value derived at a time point i (or an ith frame) from a peak signal of range-Doppler map information by the feature derivation unit 230. Further, $\Delta R$ denotes a range resolution. Furthermore, $Velocity_{Target}$ denotes a velocity of the subject 111 and $D_i$ denotes a Doppler index value derived at the time point i (or an ith frame) from a peak signal of range-Doppler map information by the feature derivation unit 230. Also, $\Delta V$ denotes a velocity resolution.

The range resolution $\Delta R$ and the velocity resolution $\Delta V$ may be derived by the following equation.

<Equation 3>

$$\Delta R = \frac{C}{2B}$$
$$\Delta V = \frac{\lambda}{2N_cT_c}$$

Herein, C denotes a speed of light in m/s, $\lambda$ denotes a wavelength in m, $N_c$ denotes the number of chirps of a radar signal, and $T_c$ denotes a time interval between chirps of a radar signal.

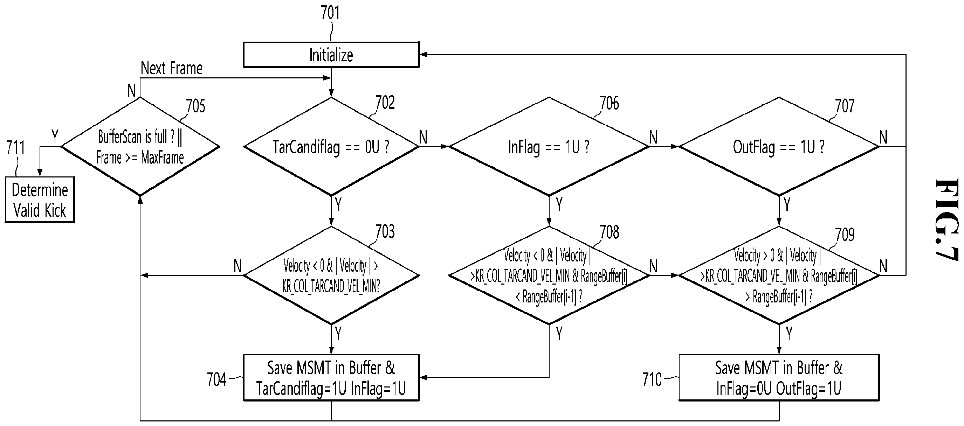

**FIG. 7** is a flowchart explaining the procedure of storing the feature information in the buffer according to an embodiment of the present disclosure.

The movement collection unit 240 may classify a movement of the subject 111 as a candidate movement based on feature information, and in this case, the feature information may be stored in a buffer. Also, the feature information may be derived for each of a plurality of frames and stored in the buffer.

The movement collection unit 240 may classify a movement of the subject as the candidate movement by comparing range information of feature information for a previous frame with range information of feature information for a current frame. Further, when the number of feature information items stored in the buffer reaches a predetermined threshold value, the movement collection unit 240 may determine to enter the kick determination state.

A process 701 in **FIG. 7** may be a process in which the movement collection unit 240 performs initialization. In the process 701, a range buffer, a velocity buffer, and an azimuth angle buffer may be initialized. Then, values of TarCandiFlag, InFlag, and OutFlag may be initialized. Herein, TarCandiFlag may be a parameter for whether a candidate for the subject is present within a radar signal reception range of the kick detection device 100. That is, TarCandiFlag may be flag information about whether a movement of the subject has been classified as a candidate movement. Also, InFlag and OutFlag may be parameters for whether a kick of the subject is a movement getting close to the kick detection device 100 or a movement getting away from the kick detection device 100. Parameter variable names to be described below are arbitrarily designated to distinguish different word senses, and may be differently designated depending on the intent of the designer or a design environment.

The movement collection unit 240 may check whether a value of TarCandiFlag is equal to a predetermined value (*e.g.*, 0 U) in a process 702. If the value is equal to the predetermined value, the process proceeds to a process 703, and, if not, the process proceeds to a process 706.

The movement collection unit 240 may derive velocity information from feature information of a radar signal in the process 703. Also, the movement collection unit 240 may check whether a value of the velocity information is smaller than 0 and greater than KR_COL_TARCAND_VEL_MIN. Herein, KR_COL_TARCAND_VEL_MIN may be a minimum reference for determination on whether a movement of the subject 111 detected by the kick detection device 100 is a kick. The value of KR_COL_TARCAND_VEL_MIN may be determined based on the velocity of a kick of an ordinary person. The movement collection unit 240 may check a velocity of a kick at which the subject can make a kick within a limited time. That is, to determine a movement getting close to the kick detection device 100, the movement collection unit 240 may classify a movement of the subject as a candidate movement when a value of velocity information is measured to be smaller than 0 and velocity information satisfies minimum velocity conditions. If the minimum velocity conditions are satisfied, a process 704 may be performed, and, if not, a process 705 may be performed.

In the process 704, when a movement of the subject 111 getting close to the kick detection device 100 is classified as a candidate movement, the movement collection unit 240 may store feature information corresponding to the movement in a buffer. More specifically, feature information MSMT corresponding to a frame at a time point when the movement of the subject 111 is classified as the candidate movement may be stored in the buffer. Herein, the feature information MSMT may include range information, velocity information, and azimuth angle information of the frame. Then, the movement collection unit 240 may set values of TarCandiFlag and InFlag to predetermined values (*e.g.*, 1 U). Then, the process 705 may be performed.

In the process 705, the movement collection unit 240 may perform an operation BufferScan to check whether the buffer is full, and may check whether the buffer is full or a value of a current frame is equal to or greater than a maximum frame MaxFrame. If the above-described conditions are fully satisfied, a process 711 may be performed, and, if not, a frame count is increased the process 702 is repeated for a radar signal of a next frame. Herein, the process 711 may refer to a kick determination state, and details thereof will be described below.

In the process 706, the movement collection unit 240 may check whether a value of InFlag is equal to a predetermined value (*e.g.*, 1 U). If the value is equal to the predetermined value, it may be determined that there is a movement getting close to the kick detection device 100 and a process 708 may be performed. If the value is not equal to the predetermined value, it may not be determined that there is a movement getting close to the kick detection device 100 and a process 707 may be performed.

In the process 707, the movement collection unit 240 may check whether a value of OutFlag is equal to a predetermined value (*e.g.*, 1 U). If the value is equal to the predetermined value, it may be determined that there is a movement getting away from the kick detection device 100 and a process 709 may be performed. If the value is not equal to the predetermined value, it may not be determined that there is a movement getting away from the kick detection device 100 and the process returns back to the initial process 701.

In the process 708, the movement collection unit 240 may determine whether a movement of the subject 111 is a movement getting gradually close to the kick detection device 100. That is, the movement collection unit 240 may check whether a value of the velocity information is smaller than 0 and the absolute value of the velocity information is greater than KR_COL_TARCAND_VEL_MIN. Also, the movement collection unit 240 may check whether a value of the range information of a previous time point (or a previous frame) is greater than a value of the range information of a current time point (or a current frame) based on the data stored in the range buffer. If the above-described conditions are satisfied, the process 704 may be performed, and, if not, the process 709 may be performed.

In the process 709, if OutFlag is equal to the predetermined value (*e.g.*, 1 U) (process 707) or there is no movement getting close to the kick detection device 100 (process 708), the movement collection unit 240 may determine whether there is a movement getting away from the kick detection device 100. The movement collection unit 240 may determine whether a value of the velocity information is greater than 0 and the absolute value of the velocity information is greater than KR_COL_TARCAND_VEL_MIN. Also, the movement collection unit 240 may check whether a value of the range information of a previous time point (or a previous frame) is greater than a value of the range information of a current time point (or a current frame) based on the data stored in the range buffer. If the above-described conditions are satisfied, a process 710 may be performed, and, if not, the process returns back to the initial process 701.

In the process 710, when a movement of the subject 111 getting away from the kick detection device 100 is classified as a candidate movement, the movement collection unit 240 may store feature information corresponding to the movement in the buffer. More specifically, feature information MSMT corresponding to a frame at a time point when the movement of the subject 111 is classified as the candidate movement may be stored in the buffer. Herein, the feature information MSMT may include range information, velocity information, and azimuth angle information of the frame. Then, the movement collection unit 240 may set a value of InFlag to a predetermined value (*e.g.*, 0 U) and a value of OutFlag to a predetermined value (*e.g.,* 1 U). Then, the process 705 may be performed.

The kick determination unit 250 may determine whether the movement of the subject is a valid kick based on a change in distance to the subject in each frame and a change in velocity of a movement of the subject in each frame.

The kick determination unit 250 may classify a movement of the subject into a proximity movement getting close to a radar and an escape movement getting away from the radar based on a change in distance to the subject in each frame and a change in velocity of a movement of the subject in each frame, and may derive a reference frame for differentiation between the proximity movement and the escape movement.

Further, the kick determination unit 250 may derive whether a movement of the subject is within a valid range based on azimuth angle information about an angle at which the subject is located with reference to the kick detection device and range information about a distance between the radar and the subject.

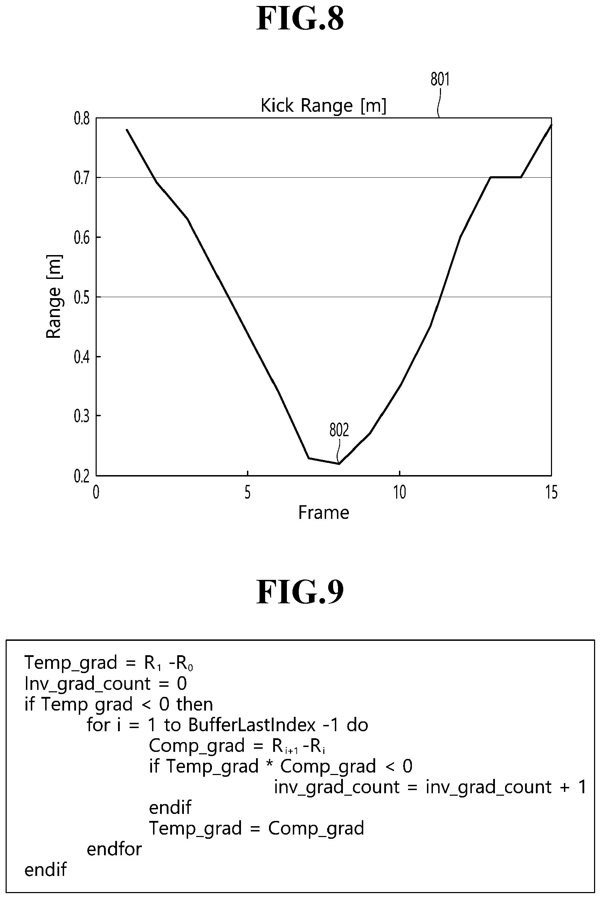

**FIG. 8** is a diagram explaining a variance in range information per frame according to an embodiment of the present disclosure.

**FIG. 8** illustrates an example of a graph 801 showing values of range information stored in the range buffer at various time points (or frames).

Referring to **FIG. 8,** it can be seen that a distance between the subject 111 and the kick detection device 100 decreases, and increases again at a certain time point (or frame) 802. That is, it can be seen that a variance in value of range information over time (or caused by an increase in frame) during the entire time period changes in sign from negative (-) to positive (+) at the time point 802. This change corresponds to physical characteristics of the subject 111's movement of kicking and retracting of his/her foot once.

**FIG. 9** shows an example of a pseudo code explaining a procedure of differentiating movements based on the variance in range information according to an embodiment of the present disclosure.

More specifically, **FIG. 9** shows a pseudo code for checking a point where a variance in value of range information over time (or caused by an increase in frame) changes in sign.

In the pseudo code of **FIG. 9,** $R_1$-$R_0$ denotes a variance in initial distance. Further, BufferLastIndex denotes a last index value of a buffer, and inv_grad_count denotes a variable for counting a change in sign of the variance in range information. Furthermore, i denotes an index value of the buffer, Temp_grad denotes a variance in previous range information, and Comp_grad denotes a variance in range information to be compared.

The kick determination unit 250 may check whether a variance in range information changes in sign while sweeping a buffer index. The kick determination unit 250 may check whether a variance in range information changes in sign by checking whether the product of Temp_grad and Comp_grad is smaller than 0. The kick determination unit 250 may sweep all the buffer indexes and then check whether a value of inv_grad_count is equal to a predetermined value (*e.g.*, 1). The value of inv_grad_count may correspond to the number of changes in sign.

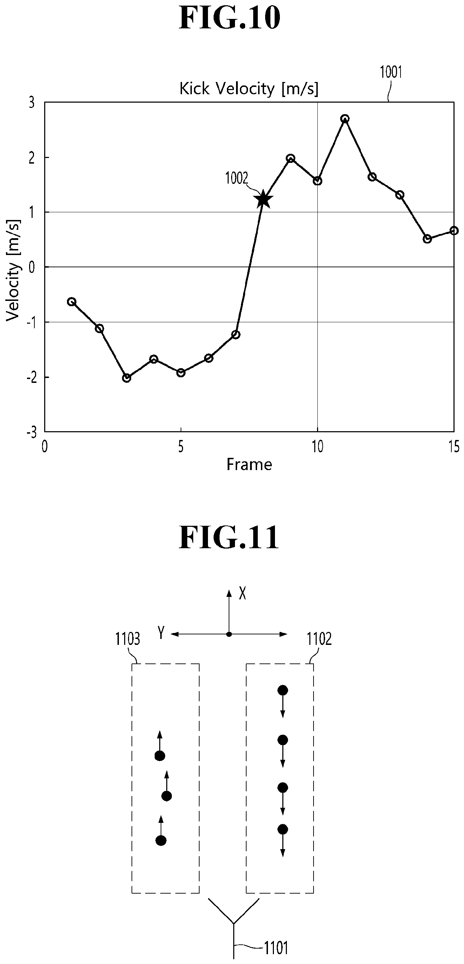

**FIG. 10** is a diagram explaining a variance in velocity information per frame according to an embodiment of the present disclosure.

**FIG. 10** illustrates an example of a graph 1001 showing values of velocity information stored in the velocity buffer at various time points (or frames). It is assumed that **FIG. 10** shows values of velocity information of the subject in the same environment as in **FIG. 8.**

Referring to **FIG. 10,** it can be seen that a velocity of the movement of the subject 111 changes in sign from negative (-) to positive (+) at a certain time point (or frame) 1002. This change corresponds to physical characteristics of the subject 111's movement of kicking and retracting of his/her foot once.

To derive the time point 1002, the kick determination unit 250 may derive an index i with a minimum value from the range buffer and derive a value of velocity information corresponding to indexes on both sides of an ith index from the velocity buffer. That is, the kick determination unit 250 may check signs of values of velocity information of an (i-1)th index and an (i+1)th index. Herein, if a value of velocity information in an (i-1)th velocity buffer is smaller than 0 and a value of velocity information in an (i+1)th velocity buffer is greater than 0, the kick determination unit 250 may derive an ith frame as a reference frame.

The time point 1002 of **FIG. 10** may correspond to the time point 802 of **FIG. 8.** That is, a time point when a variance in range information changes in sign may be identical or similar to a time point when velocity information changes in sign.

**FIG. 11** is a diagram explaining a valid range of kick detection according to an embodiment of the present disclosure.

A kick of the subject is classified into a proximity movement in which the subject's foot gets close to a kick detection device 1101 and an escape movement in which the subject's foot gets away from the kick detection device 1101.

**FIG. 11** illustrates an example of orientation of a proximity movement 1102 at each time point and an example of orientation of an escape movement 1103 at each time point. This kick may be displayed on a two-dimensional map having a longitudinal axis (X-axis) and a transverse axis (Y-axis). The kick determination unit 250 may check whether a difference in position in the transverse direction (Y-axis direction) between the proximity movement 1102 getting close to the kick detection device 1101 and the escape movement 1103 getting away from the kick detection device 1101 exceeds a threshold value. When the proximity movement 1102 and the escape movement 1103 are performed within the threshold value in the transverse direction, it may correspond to physical characteristics of the subject 111's kick including straight kicking and retracting of his/her foot.

The kick determination unit 250 may derive a reference frame for making a pair of the proximity movement 1102 and the escape movement 1103 to obtain a distance difference in the transverse direction (Y-axis direction).

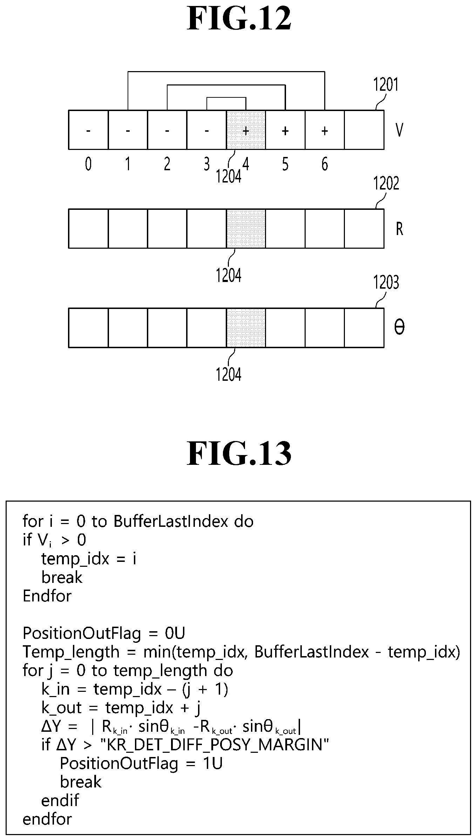

**FIG. 12** is a diagram explaining a procedure of identifying information of the buffer according to an embodiment of the present disclosure.

**FIG. 12** illustrates that feature information is stored in a velocity buffer 1201, a range buffer 1202, and an azimuth angle buffer 1203 as described above with reference to **FIG. 8** and **FIG. 10.** The kick determination unit 250 may derive a reference frame 1204 based on a time point when a variance in range information changes in sign and a time point when velocity information changes in sign.

The kick determination unit 250 may derive a coordinate value in the transverse direction (Y-axis direction) within a valid range based on a value of range information for each index in the range buffer.

<Equation 4>

$$Y_i = R_i \cdot \sin \theta_i$$

In Equation 4, $Y_i$ denotes a transversal coordinate value at a time point i (or an ith frame), and $R_i$ denotes a value of range information at the time point i ( or the ith frame). Further, $\theta_i$ denotes a value of azimuth angle information at the time point i (or the ith frame).

In the example shown in **FIG. 12,** a fourth index in the buffer refers to a time point when a value of velocity information changes first in sign and corresponds to the reference frame 1204. A third index, a second index and a first index make pairs with a fourth index, a fifth index and a sixth index, respectively, based on the reference frame 1204. The kick determination unit 250 may compute a transversal distance difference $\Delta Y$ between the corresponding indexes in each pair.

<Equation 5>

$$\Delta Y = Y_{in-kick} - Y_{out-kick} < \text{KR\_DET\_DIFF\_POSY\_MARGIN}$$

In Equation 5, $\Delta Y$ denotes a transversal distance difference between the corresponding indexes in each pair, $Y_{in-kick}$ denotes a transversal coordinate value of a proximity movement in a pair of corresponding indexes, and $Y_{out-kick}$ denotes a transversal coordinate value of an escape movement in a pair of corresponding indexes. Also, KR_DET_DIFF_POSY_MARGIN may be a threshold value within a valid range in the transverse direction. The threshold value within the valid range in the transverse direction may be variously determined depending on the intent of the designer, a design environment, or the performance of the transceiver 210.

**FIG. 13** shows an example of a pseudo code explaining a procedure of determining a valid kick according to an embodiment of the present disclosure.

In **FIG. 13,** KR_DET_DIFF_POSY_MARGIN may be the threshold value within the valid range in the transverse direction.

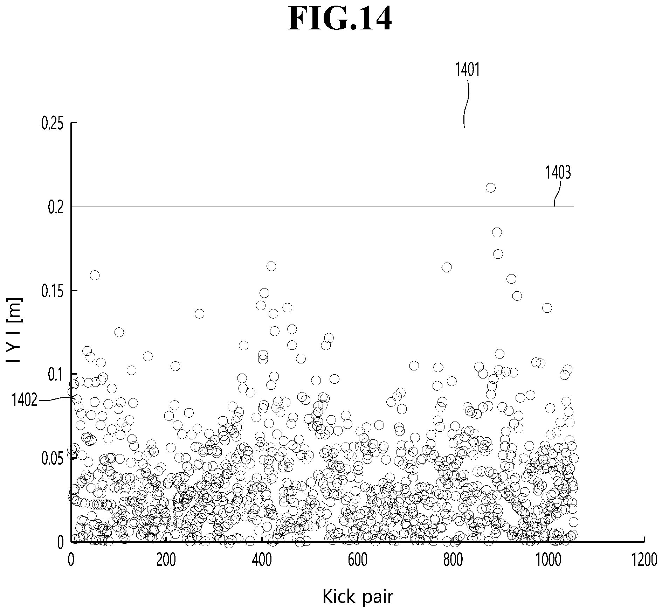

**FIG. 14** is a diagram explaining a threshold point of a valid range according to an embodiment of the present disclosure.

**FIG. 14** illustrates an example of a graph 1401 showing pairs of proximity movements and escape movements of the subject for respective transversal distance differences. It can be seen that most of pairs 1402 of proximity movements and escape movements including straight kicking and retracting of his/her foot have transversal distance differences which do not exceed a threshold value 1403.

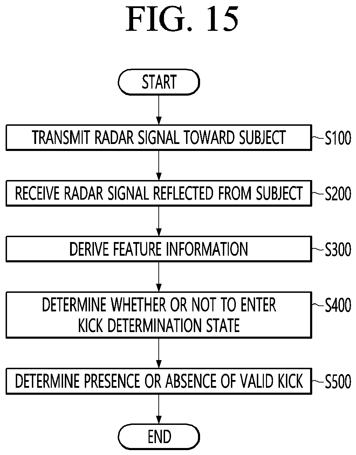

**FIG. 15** is a flowchart showing a kick detection method according to an embodiment of the present disclosure.

The kick detection method using a radar illustrated in **FIG. 15** includes the processes time-sequentially performed according to the embodiment described above with reference to **FIG. 1** to **FIG. 14.** Therefore, the above descriptions of the processes may also be applied to the kick detection method performed by the kick detection device according to the embodiment described above with reference to **FIG. 1** to **FIG. 14** even though they are omitted hereinafter.

Referring to **FIG. 15,** the kick detection method may include a process S100 of transmitting a radar signal toward a subject, a process S200 of receiving a radar signal reflected from the subject, a process S300 of deriving feature information of the subject based on the radar signal, a process S400 of determining whether or not to enter a kick determination state based on the feature information, and a process S500 of determining whether a movement of the subject is a valid kick based on the collected feature information in the kick determination state.

The kick detection method may further include a process (not shown) of generating a peak signal by filtering the radar signal, and in the process S300 of deriving the feature information, the feature information of the subject may be derived based on the peak signal.

Further, in the process of generating the peak signal, range-Doppler map information may be generated based on the radar signal and the peak signal may be derived by filtering the range-Doppler map information.

The kick detection method can be implemented as a computer program stored in a computer-readable storage medium to be executed by a computer or a storage medium including instructions executable by a computer. Also, the kick detection method can be implemented as a computer program stored in a computer-readable storage medium to be executed by a computer.

A computer-readable medium can be any usable medium which can be accessed by the computer and includes all volatile/non-volatile and removable/non-removable media. Further, the computer-readable medium may include all computer storage and communication media. The computer storage medium includes all volatile/non-volatile and removable/non-removable media embodied by a certain method or technology for storing information such as computer-readable instruction code, a data structure, a program module or other data. The communication medium typically includes the computer-readable instruction code, the data structure, the program module, or other data of a modulated data signal such as a carrier wave, or other transmission mechanism, and includes a certain information transmission medium.

The kick detection method may be divided into additional processes or combined into fewer processes in the embodiment described above with reference to **FIG. 1** to **FIG. 14.** In addition, some of the processes may be omitted and the sequence of the processes may be changed if necessary.

The above description of the present disclosure is provided for the purpose of illustration, and it would be understood by those skilled in the art that various changes and modifications may be made without changing technical conception and essential features of the present disclosure. Thus, it is clear that the above-described embodiments are illustrative in all aspects and do not limit the present disclosure. For example, each component described to be of a single type can be implemented in a distributed manner. Likewise, components described to be distributed can be implemented in a combined manner.

The scope of the present disclosure is defined by the following claims rather than by the detailed description of the embodiment. It shall be understood that all modifications and embodiments conceived from the meaning and scope of the claims and their equivalents are included in the scope of the present disclosure.

**Claims**

1. A kick detection device of detecting a kick using a radar signal, comprising:

   a transceiver configured to transmit a radar signal toward a subject and receive a radar signal reflected from the subject;
   a feature derivation unit configured to derive feature information of the subject based on the radar signal;
   a movement collection unit configured to determine whether or not to enter a kick determination state based on the feature information; and
   a kick determination unit configured to determine whether a movement of the subject is a valid kick based on the feature information in the kick determination state.

2. The kick detection device of Claim 1, further comprising:

   a filtering unit configured to generate a peak signal by filtering the radar signal,
   wherein the feature derivation unit derives the feature information of the subject based on the peak signal.

3. The kick detection device of Claim 2,
   wherein the filtering unit generates range-Doppler map information based on the radar signal and derives the peak signal by filtering the range-Doppler map information.

**4.** The kick detection device of Claim 3,
wherein the filtering unit removes noise from the range-Doppler map and derives a signal with a power equal to or higher than a predetermined threshold value as the peak signal.

**5.** The kick detection device of Claim 3 or 4,
wherein the feature derivation unit derives, from the peak signal, at least one of range information about a range between the kick detection device and the subject and velocity information about a velocity of a movement of the subject.

**6.** The kick detection device of any one of Claims 1 to 5,
wherein the feature derivation unit derives azimuth angle information about an azimuth angle at which the subject is located with reference to the kick detection device based on a phase difference between the radar signals.

**7.** The kick detection device of any one of Claims 1 to 6,
wherein the feature information includes at least one of azimuth angle information about an azimuth angle at which the subject is located with reference to the kick detection device, range information about a range between the kick detection device and the subject, and velocity information about a velocity of a movement of the subject.

**8.** The kick detection device of Claim 7,

wherein the movement collection unit classifies the movement of the subject as a candidate movement based on the feature information, and
in this case, the feature information is stored in a buffer.

**9.** The kick detection device of Claim 8,
wherein the feature information is derived for each of a plurality of frames and stored in the buffer.

**10.** The kick detection device of Claim 9,
wherein the movement collection unit classifies the movement of the subject as the candidate movement by comparing range information of feature information for a previous frame with range information of feature information for a current frame.

**11.** The kick detection device of any one of Claims 8 to 10,
wherein when the number of feature information items stored in the buffer reaches a predetermined threshold value, the movement collection unit determines to enter the kick determination state.

**12.** The kick detection device of any one of Claims 1 to 11,
wherein the kick determination unit determines whether the movement of the subject is a valid kick based on range change information about a change in distance to the subject in each frame and velocity change information about a change in velocity of the movement of the subject in each frame.

**13.** The kick detection device of Claim 12,
wherein the kick determination unit classifies the movement of the subject into a proximity movement getting close to the kick detection device and an escape movement getting away from the kick detection device based on the range change information and the velocity change information, and derives a reference frame for differentiation between the proximity movement and the escape movement.

**14.** The kick detection device of Claim 12 or 13,
wherein the kick determination unit derives whether the movement of the subject is within a valid range based on azimuth angle information about an angle at which the subject is located with reference to the kick detection device and range information about a distance between the radar and the subject.

**15.** A kick detection method of detecting a kick using a radar signal, comprising:

a process of transmitting a radar signal toward a subject;
a process of receiving a radar signal reflected from the subject;
a process of deriving feature information of the subject based on the radar signal;
a process of determining whether or not to enter a kick determination state based on the feature information; and

a process of determining whether a movement of the subject is a valid kick based on the feature information in the kick determination state.

# FIG. 1

# FIG. 2

# FIG.3

# FIG.4

401

402

403

R, V, θ, P

R: Range
V: Velocity
θ: Azimuth Angle
P: Power

\<RD Map\>

# FIG.5

501

R

V

θ

502

503

504

# FIG.6

**FIG.7**

701 Initialize

Next Frame

705 BufferScan is full ? || Frame >= MaxFrame — N → (Next Frame)

711 Determine Valid Kick ← Y

702 TarCandiflag == 0U ? — N →

706 InFlag == 1U ? — N →

707 OutFlag == 1U ? — N →

703 Velocity < 0 & | Velocity | > KR_COL_TARCAND_VEL_MIN? — N →

708 Velocity < 0 & | Velocity | >KR_COL_TARCAND_VEL_MIN & RangeBuffer[i] < RangeBuffer[i-1] ? — N →

709 Velocity > 0 & | Velocity | >KR_COL_TARCAND_VEL_MIN & RangeBuffer[i] > RangeBuffer[i-1] ? — N →

704 Save MSMT in Buffer & TarCandiflag=1U InFlag=1U ← Y

710 Save MSMT in Buffer & InFlag=0U OutFlag=1U ← Y

# FIG.8

# FIG.9

```
Temp_grad = R₁ -R₀
Inv_grad_count = 0
if Temp grad < 0 then
        for i = 1 to BufferLastIndex -1 do
                Comp_grad = Rᵢ₊₁ -Rᵢ
                if Temp_grad * Comp_grad < 0
                                inv_grad_count = inv_grad_count + 1
                endif
                Temp_grad = Comp_grad
        endfor
endif
```

# FIG.10

# FIG.11

# FIG.12

| | | | | | | | | |
|---|---|---|---|---|---|---|---|---|
| - | - | - | - | + | + | + | | V |

0   1   2   3   4   5   6

1201

1204

1202

R

1204

1203

θ

1204

# FIG.13

```
for i = 0 to BufferLastIndex do
if Vᵢ > 0
    temp_idx = i
    break
Endfor

PositionOutFlag = 0U
Temp_length = min(temp_idx, BufferLastIndex - temp_idx)
for j = 0 to temp_length do
    k_in = temp_idx − (j + 1)
    k_out = temp_idx + j
    ΔY =  | R_k_in· sinθ_k_in -R_k_out· sinθ_k_out|
    if ΔY > "KR_DET_DIFF_POSY_MARGIN"
        PositionOutFlag = 1U
        break
    endif
endfor
```

# FIG.14

# FIG. 15

```
        ┌─────────────┐
        │    START    │
        └─────────────┘
               │
               ▼
┌──────────────────────────────────────┐
│ TRANSMIT RADAR SIGNAL TOWARD SUBJECT  │─S100
└──────────────────────────────────────┘
               │
               ▼
┌──────────────────────────────────────┐
│ RECEIVE RADAR SIGNAL REFLECTED FROM SUBJECT │─S200
└──────────────────────────────────────┘
               │
               ▼
┌──────────────────────────────────────┐
│        DERIVE FEATURE INFORMATION     │─S300
└──────────────────────────────────────┘
               │
               ▼
┌──────────────────────────────────────┐
│     DETERMINE WHETHER OR NOT TO ENTER │─S400
│         KICK DETERMINATION STATE      │
└──────────────────────────────────────┘
               │
               ▼
┌──────────────────────────────────────┐
│ DETERMINE PRESENCE OR ABSENCE OF VALID KICK │─S500
└──────────────────────────────────────┘
               │
               ▼
        ┌─────────────┐
        │     END     │
        └─────────────┘
```

Europäisches
Patentamt

European
Patent Office

Office européen
des brevets

# EUROPEAN SEARCH REPORT

**Application Number**

EP 24 19 3036

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/302253 A1 (SANTRA AVIK [DE] ET AL) 3 October 2019 (2019-10-03) * paragraph [0004] * * paragraph [0027] - paragraph [0031]; figures 8-13 * * paragraph [0050] - paragraph [0065] * | 1-15 | INV. G01S13/931 G01S7/41 E05F15/73 |
| X | DE 10 2018 107881 A1 (VALEO SCHALTER & SENSOREN GMBH [DE]) 10 October 2019 (2019-10-10) * paragraph [0001] - paragraph [0002] * * paragraph [0038] - paragraph [0039] * * paragraph [0066] - paragraph [0075] * * paragraph [0010] * * paragraph [0018] * | 1-15 | |

**TECHNICAL FIELDS SEARCHED (IPC)**

G01S
E05F
E05G

The present search report has been drawn up for all claims

| Place of search | Date of completion of the search | Examiner |
|---|---|---|
| Munich | 18 October 2024 | Heiß, Michael |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons
.......................................................................
& : member of the same patent family, corresponding
  document

EPO FORM 1503 03.82 (P04C01)

**EP 4 628 935 A1**

## ANNEX TO THE EUROPEAN SEARCH REPORT
## ON EUROPEAN PATENT APPLICATION NO.

EP 24 19 3036

This annex lists the patent family members relating to the patent documents cited in the above-mentioned European search report.
The members are as contained in the European Patent Office EDP file on
The European Patent Office is in no way liable for these particulars which are merely given for the purpose of information.

18-10-2024

| Patent document cited in search report | Publication date | Patent family member(s) | Publication date |
|---|---|---|---|
| US 2019302253 A1 | 03-10-2019 | CN 110316148 A<br>EP 3546979 A1<br>US 2019302253 A1 | 11-10-2019<br>02-10-2019<br>03-10-2019 |
| DE 102018107881 A1 | 10-10-2019 | DE 102018107881 A1<br>WO 2019192947 A1 | 10-10-2019<br>10-10-2019 |

EPO FORM P0459

For more details about this annex : see Official Journal of the European Patent Office, No. 12/82